# EUROPEAN PATENT APPLICATION

(11) **EP 4 199 308 A1**
(43) Date of publication of application: **21.06.2023**
(21) Application number: 22186222.0
(22) Date of filing: 21.07.2022
(51) Int. Cl.: H02J 50/60, H02J 50/80

(54) **POWER TRANSMISSION DEVICE AND POWER SUPPLY SYSTEM**

(30) Priority: 17.12.2021 JP 2021205400
(71) Applicant: Toshiba TEC Kabushiki Kaisha, Tokyo 141-8562 (JP)
(72) Inventor: Kato, Masakazu, Tokyo, 141-8562 (JP)
(74) Representative: Hoffmann Eitle

(57) **Abstract**

A non-contact power transmission device includes a power transmission circuit connected to a power transmission coil and configured to transmit power to a power reception coil through the power transmission coil in a non-contact manner, and a control circuit configured to perform first power transmission by which power at a first level is transmitted from the power transmission coil. The control circuit is further configured to perform a foreign object detection by which a foreign object between the power transmission coil and the power reception coil can be detected, and the first power transmission is performed after the foreign object detection if the foreign object is not detected.

## Description

### CROSS-REFERENCE TO RELATED APPLICATIONS

This application is based upon and claims the benefit of priority from Japanese Patent Application No. 2021-205400, filed December 17, 2021, the entire contents of which are incorporated herein by reference.

### FIELD

Embodiments described herein relate generally to a non-contact power transmission device, a non-contact power supply system, and a method performed by a non-contact power transmission device.

### BACKGROUND

In recent years, a system including a cart, such as a shopping cart, on which an electronic device is mounted, has been developed. A battery that supplies electric power to the electronic device is also mounted on the cart. As a power supply system of such a battery mounted on a cart, a non-contact power transmission technology is adopted for supplying power to the battery in a non-contact manner when the cart is placed in a storage area. For example, in such a non-contact power supply system, a power reception coil is provided in a cart, and a power transmission coil is installed in the storage area for supplying power to the power reception coil of the cart while in the storage area. For example, there is a power supply system in which a power transmission coil provided on a floor surface of a cart storage area transmits power to a power reception coil provided on a lower side of a front end portion of the cart.

In a power supply system that performs power transmission in a non-contact manner, when power transmission is performed with a foreign object, particularly a metal object, present between the power transmission coil and the power reception coil, the presence of the foreign object during power transmission may cause an unintended generation of heat. Therefore, there is a technique for determining the presence or absence of such a foreign object by measuring an input current to the power transmission unit and comparing the input current with a preset threshold value or limit. However, when a small metal foreign object is between the power transmission and reception coils during power transmission, the change in the transmission power current due to the metal foreign object can be slight, and thus it is not easy to detect the presence of such a foreign object.

Therefore, there is a method in which connection and disconnection are periodically repeated on the power reception side, and a current value is detected on the power transmission side to determine the presence or absence of a foreign object. In such a case, however, it is necessary to control both the power transmission unit and the power reception unit to detect the foreign object.

### SUMMARY OF THE INVENTION

The object of the invention is achieved by the subject-matter of the independent claims. Advantageous embodiments are defined in the dependent claims. Further examples are provided for facilitating the understanding of the invention.

According to a first aspect of the invention, it is provided a non-contact power transmission device, comprising a power transmission circuit connected to a power transmission coil and configured to transmit power to a power reception coil through the power transmission coil in a non-contact manner; and a control circuit configured to perform first power transmission by which power is transmitted from the power transmission coil at a first level, wherein the control circuit is further configured to perform a foreign object detection by which a foreign object between the power transmission coil and the power reception coil can be detected before the first power transmission is performed, the foreign object detection using power transmitted from the power transmission coil at a second level that is less than the first level, and perform the first power transmission after the foreign object detection if the foreign object is not detected.

Optionally, in the non-contact power transmission device according to the first aspect of the invention, the control circuit is further configured to perform authentication processing for determining the power reception coil is a component of a compatible power reception device before performing the foreign object detection.

Optionally, in the non-contact power transmission device according to the first aspect of the invention, the control circuit is further configured to perform authentication processing for determining the power reception coil is a component of a compatible power reception device before performing the first power transmission.

Optionally, in the non-contact power transmission device according to the first aspect of the invention, the authentication processing is performed using power transmitted from the power transmission at the second level.

Optionally, the non-contact power transmission device according to the first aspect of the invention further comprises a current sensor configured to detect a current that flows in the power transmission circuit, wherein the foreign object detection is based on the current detected by the current sensor.

Optionally, in the non-contact power transmission device according to the first aspect of the invention, wherein the control circuit is further configured to determine that the foreign object is present between the power transmission coil and the power reception coil when the current detected by the current sensor does not fall below a threshold value within a predetermined period after the foreign object detection is started.

Optionally, in the non-contact power transmission device according to first aspect of the invention, the foreign object comprises a metal.

Optionally, the non-contact power transmission device according to the first aspect of the invention further comprises a communication circuit configured to transmit information about the power transmitted from the power transmission coil.

Optionally, the non-contact power transmission device according to the first aspect of the invention further comprises a housing in which the power transmission circuit and the control circuit are located, wherein the housing is installable in a guide rail for guiding a cart that includes the power reception coil.

Optionally, in the non-contact power transmission device according to the first aspect of the invention, the housing includes a surface that faces both a power transmission surface of the power transmission coil and a power reception surface of the power reception coil.

According to a second aspect of the invention, it is comprised a non-contact power supply system, comprising a power reception device including a power reception coil; and a power transmission device including a power transmission circuit connected to a power transmission coil and configured to transmit power to the power reception device through the power transmission coil in a non-contact manner, and a control circuit configured to perform a first power transmission by which power at a first power level is transmitted from the power transmission coil, wherein the control circuit is further configured to perform a foreign object detection by which a foreign object between the power transmission device and the power reception device can be detected before the first power transmission is performed, the foreign object detection using power transmitted from the coil at a second power level that is less than the first power level, and perform the first power transmission after the foreign object detection if the foreign object is not detected.

Optionally, in the non-contact power supply system according to the second aspect of the invention, the control circuit is further configured to perform authentication processing for determining the power reception coil is a component of a compatible power reception device before performing the foreign object detection.

Optionally, in the non-contact power supply system according to the second aspect of the invention, the control circuit is further configured to perform authentication processing for determining whether the power reception device is a compatible device before performing the first power transmission.

Optionally, in the non-contact power supply system according to second aspect of the invention, the authentication processing is performed based on power transmitted from the power transmission device at the second power level.

Optionally, in the non-contact power supply system according to second aspect of the invention, a current sensor configured to detect a current that flows in the power transmission circuit, wherein the foreign object detection is based on the current detected by the current sensor.

Optionally, in the non-contact power supply system according to the second aspect of the invention, the control circuit is further configured to determine that the foreign object is present between the power transmission device and the power reception device when the current detected by the current sensor does not fall below a threshold value within a predetermined period after the foreign object detection is started.

Optionally, in the non-contact power supply system according to the second aspect of the invention, the power reception device is configured to remain in an idle state if power received from the power transmission device is less than the first power level.

Optionally, the non-contact power supply system according to the second aspect of the invention further comprises a cart; and a base on which the cart is stored, wherein the power reception device is attached to a lower portion of the cart, and the power transmission device is installed in the base.

Optionally, in the non-contact power supply system according to the second aspect of the invention, the base is on a floor on which the cart is movable.

According to a third aspect of the invention, it is provided a method performed by a non-contact power transmission device that includes a power transmission circuit connected to a power transmission coil configured to transmit power to a power reception coil, the method comprising performing a foreign object detection by which a foreign object can be detected between a power transmission coil and a power reception coil can be detected; and if the foreign object is not detected in the foreign object detection, performing a first power transmission at a first power level, wherein the foreign object detection is performed at a second power level that is less than first power level.

### BRIEF DESCRIPTION OF THE DRAWINGS

FIG. 1 illustrates a perspective view of a power supply system according to an embodiment.
FIG. 2 is a perspective view illustrating a cart of a power supply system according to an embodiment.
FIG. 3 is a block diagram illustrating a power supply system according to an embodiment.
FIG. 4 is a perspective view illustrating a power reception device and a power transmission device of a power supply system according to an embodiment.
FIG. 5 is a flowchart of power transmission processing performed by a power supply system according to an embodiment.
FIG. 6 is a graph showing changes in a power transmission current in a power supply system according to an embodiment.

### DETAILED DESCRIPTION

In general, according to one embodiment, a non-contact power transmission device includes a power transmission circuit connected to a power transmission coil and configured to transmit power to a power reception coil through the power transmission coil in a non-contact manner. The non-contact power transmission device further includes a control circuit configured to perform first power transmission processing by which power at a first level is transmitted from the power transmission coil. The control circuit is further configured to perform a foreign object detection by which a foreign object between the power transmission coil and the power reception coil can be detected using power at a second level less than the first level. The control circuit is further configured to perform the first power transmission processing after the foreign object detection if the foreign object is not detected.

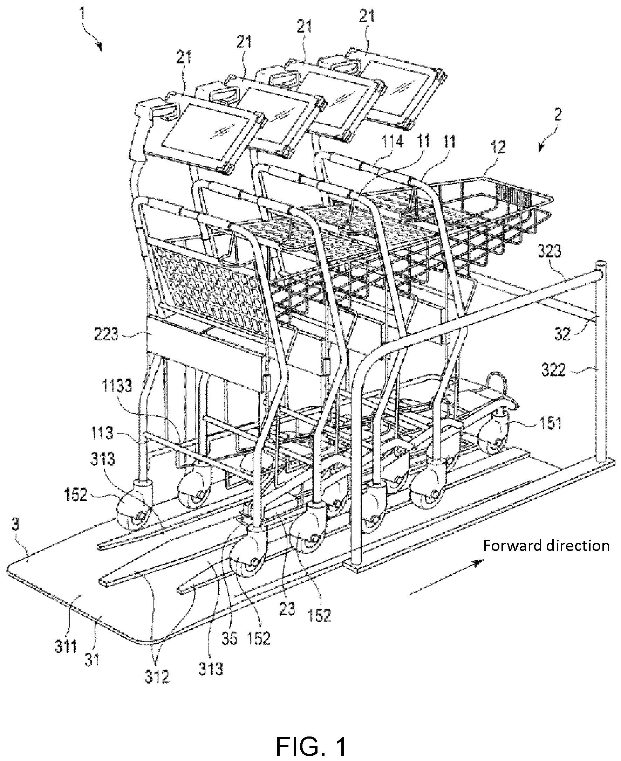

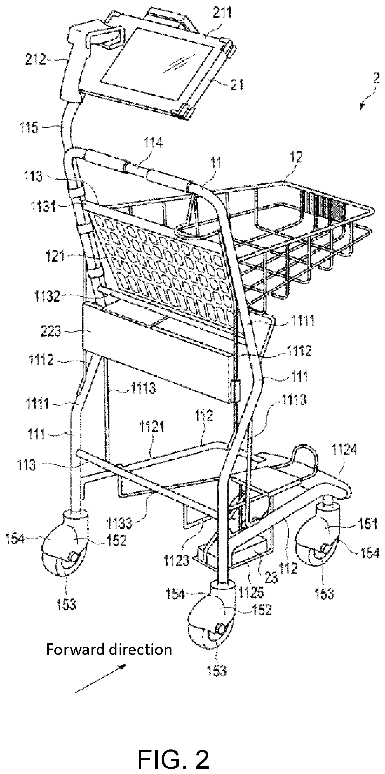

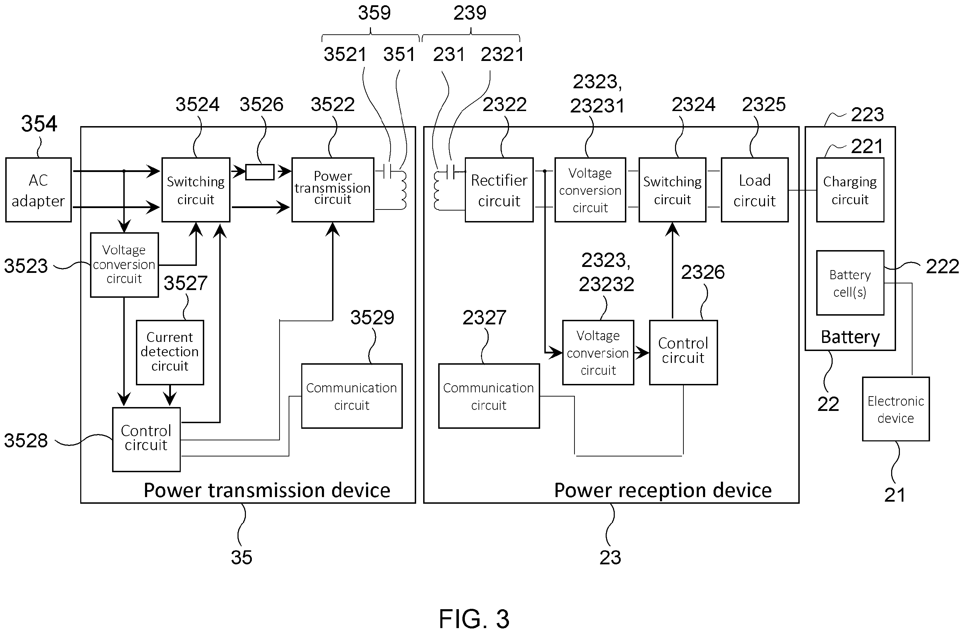

A power supply system 1 according to one example embodiment will be described below with reference to FIGS. 1 to 6. FIG. 1 is a perspective view showing the power supply system 1, and FIG. 2 is a perspective view of a cart of the power supply system 1. FIG. 3 is a block diagram of the power supply system 1.

As illustrated in FIGS. 1 and 3, the power supply system 1 includes a power reception device 23 and a power transmission device 35. The power reception device 23 is attached to, for example, a cart 2. Cart 2 may be, for example, a shopping cart or the like. A plurality of power transmission devices 35 can provided in a cart base 3 along which a plurality of carts 2 may be placed and stored when not in use by a customer or other user. In the following, an example of a power supply system 1 in which a power reception device 23 is attached to a cart 2 and power transmission devices 35 are provided in a cart base 3 will be described.

As shown in FIG. 1, the power supply system 1 comprises one or more carts 2 (each cart 2 including a power reception device 23), and a cart base 3 on which carts 2 can be placed. The cart base 3 includes one or more power transmission devices 35. In the power supply system 1, the carts 2 can be housed (nested) together along the direction in which the cart base 3 extends (the lengthwise direction of the cart base 3). The power transmission devices 35 are arranged adjacent to one another along the lengthwise direction of the cart base at a predetermined interval. The predetermined interval between the power transmission devices 35 corresponds to the distance between power reception devices 23 on adjacent carts 2 when the carts 2 are nested (stored) on the cart base 3.

The cart 2 illustrated in FIG. 2 is a shopping cart. The cart 2 includes a frame 11, a basket portion 12, casters 151 (front) and casters 152 (rear), an electronic device 21, a battery box 223 (in which a battery 22 is provided), and a power reception device 23.

The frame 11 is formed by assembling a plurality of frame members extending in different directions. The frame 11 supports and connects the basket portion 12, the casters 151, 152, the electronic device 21, and the power reception device 23.

The frame 11 includes, for example, a pair (left and right) of vertical frame portions 111, a lower frame portion 112, a horizontal frame portion 113, a handle portion 114, and a mounting frame 115. The vertical frame portions 111, the lower frame portion 112, and the horizontal frame portion 113 extend in directions intersecting each other.

The vertical frame portions 111 each comprise a main frame 1111 extending upward from a rear wheel caster 152, a sub-frame 1112 provided on the rear side of the main frame 1111, and a sub-frame 1113 provided on the front side of the main frame 1111. The vertical frame portions 111 extend in the vertical direction at the rear of the basket portion 12, and each rear wheel caster 152 is disposed at a lower end portion thereof.

The lower frame portion 112 comprises a plurality of frame members disposed parallel (or roughly so) to the floor surface. The lower frame portion 112 includes, for example, a pair of main frames 1121, a support frame 1123, a front coupling portion 1124, and a mounting portion 1125 provided below the support frame 1123. The main frame 1121 extends forward from the rear wheel casters 152 toward the front wheel caster 151.

The support frame 1123 extends downward from the horizontal frame portion 113, is bent forward at a predetermined height, and extends forward, and has a front end portion bent upward. The support frame 1123 is formed of, for example, a U-shaped frame member that is bent and folded upward. The support frame 1123 extends along a plane parallel to the floor surface inside the main frame 1121. The support frame 1123 can hold a basket on its upper side.

The front coupling portion 1124 extends in the width direction at a front end portion of a lower end of the cart 2 and connects front ends of the pair of main frames 1121.

An upper end of the mounting portion 1125 is fixed to the support frame 1123. The mounting portion 1125 extends downward from the support frame 1123, is bent rearward at a predetermined height, and extends rearward. The mounting portion 1125 is a frame member to which the power reception device 23 is attached. The mounting portion 1125 extends parallel to the floor surface and is at a position inside the main frame 1121 (that is, in a region substantially surrounded by the main frame 1121. The mounting portion 1125 provides a support surface for supporting the power reception device 23 below the support frame 1123. For example, the mounting portion 1125 has a dimension such that, when the cart 2 is placed on the cart base 3, a power transmission device 35 provided in the cart base 3 and the power reception device 23 provided on the mounting portion 1125 face each other at a predetermined distance (gap) therebetween.

The horizontal frame portion 113 includes a plurality of link frames 1131, 1132, 1133 extending in the width direction of the cart 2 between the left and right vertical frame portions 111.

The handle portion 114 is disposed above the rear end portion of the cart 2. The handle portion 114 is disposed continuously with an upper end portion of the vertical frame portions 111. For example, the handle portion 114 extends in the width direction.

The mounting frame 115 is connected to one of the vertical frame portions 111. The mounting frame 115 extends, for example, above one of the vertical frame portions 111 and supports the electronic device 21.

In the frame 11, the basket portion 12 is supported by the vertical frame portions 111, and the front wheel casters 151 and the rear wheel casters 152 are respectively provided at a front end portion and a rear end portion of the lower frame portion 112 arranged below the basket portion 12. In addition, in the frame 11, the power reception device 23 is installed on the mounting portion 1125, which is a part of the lower frame portion 112 and arranged along the floor surface. The battery box 223 is attached to the vertical frame portions 111. For example, the battery box 223 is supported by the pair of sub-frames 1112.

Further, in the lower frame portion 112, the pair of main frames 1121 extend obliquely toward the center on the front side so that the distance between the main frames 1121 on the front side becomes narrower. Accordingly, the frame 11 is formed to have a narrower width at its front side than its rear side along the forward direction of the cart 2.

The basket portion 12 is formed of, for example, a perforated panel member or a mesh-like wire member having a box shape that is open upward. The basket portion 12 is disposed at a height above the floor surface in front of the vertical frame portions 111. Both left and right sides of a rear end portion of the basket portion 12 are supported by the vertical frame portions 111.

Each of the front wheel casters 151 and the rear wheel casters 152 includes a wheel 153, and a bracket portion 154 rotatably supporting the wheel 153. The bracket portion 154 is rotatably attached to the frame 11. As the wheels 13 of the casters 15 rotate on the floor, the cart 2 moves. The traveling direction of the cart 2 can be changed by rotating the bracket portion 154 of the caster 15.

Similarly to the shapes of the frame 11 and the basket portion 12, the front wheel casters 151 are disposed so as to be closer to each other in the width direction than the rear wheel casters 152. Therefore, for example, when a plurality of carts 2 are stored in a row in the front-rear direction, the frames 11 of rearward carts 2 can be stored in an overlapping manner along the frames 11 of frontward carts 2.

The electronic device 21 is an information terminal such as a tablet terminal for providing information to a user, or a product reader that acquires information on a product selected by the user. The electronic device 21 is connected to, for example, the battery 22, and is driven by power from the battery 22. The electronic device 21 may be a charging device for charging an electronic device such as a portable terminal (for example, a mobile phone, a smartphone, or a digital camera) carried by the user with power from the battery 22.

An example in which a tablet terminal 211 and a product reader 212 are provided as the electronic device 21 will be described. The tablet terminal 211 has a display unit provided with a touch panel. The tablet terminal 211 is installed with the display unit on the cart 2 to face the user located on the handle portion 114 side. The tablet terminal 211 displays, for example, information of a product read by the product reader 212. Further, the tablet terminal 211 may perform registration and checkout processing on the product read by the product reader 212.

The product reader 212 reads information on a product. Further, the product reader 212 may have a display unit for displaying information of the read product. The product reader 212 is, for example, an RFID (radio frequency identification) tag reader that reads an RFID tag or the like attached to a product to be put in and out of the basket portion 12. Further, the product reader 212 may be a scanner that reads product identification information such as a barcode attached to a product.

The electronic device 21 may be an interface device for connecting a portable terminal (a smartphone, a tablet terminal, or the like) carried by the user instead of the tablet terminal 211. The portable terminal connected to the interface device as the electronic device 21 may perform the same process as the tablet terminal 211 described above. The interface device as the electronic device 21 can charge a battery of the portable terminal. The interface device as the electronic device 21 may incorporate the battery 22 or may be connected to the battery 22 provided separately.

The battery box 223 is attached to the frame 11. The battery box 223 is fixed to and supported by, for example, the pair of sub-frames 1112 disposed below an opening/closing panel 121 of the basket portion 12. The battery 22 supplies electric power to the electronic device 21 mounted on the cart 2, and comprises a charging circuit 221 and a battery cell 222 as shown in FIG. 3. The battery 22 is connected to the power reception device 23 and is charged by the power received by the power reception device 23.

The charging circuit 221 supplies power supplied from a load circuit 2325 of the power reception device 23 to the battery cell 222. For example, the charging circuit 221 converts electric power supplied from the load circuit 2325 into a direct current power for charging the battery cell(s) 222. That is, the charging circuit 221 converts electric power from the load circuit 2325 into charging electric power having a predetermined current value and voltage value suitable for charging the battery cell(s) 222, and then supplies the charging electric power to the battery cells 222.

The battery 22 is connected to the electronic device 21 and supplies electric power to the electronic device 21 from the battery cell(s) 222.

The power reception device 23 receives power transmitted in a non-contact manner and supplies the received power to the electronic device 21 or the battery 22. The power reception device 23 may include an output terminal that supplies power directly to the electronic device 21. In such a case, the battery 22 may be charged by power supplied via the electronic device 21 rather than directly from the power reception device 23.

The power reception device 23 is provided in a lower portion of the cart 2. The power reception device 23 is disposed, for example, below the lower frame portion 112. When that cart 2 is stored in the cart base 3, the power reception device 23 on the cart 2 faces one of the power transmission devices 35 provided in the cart base 3.

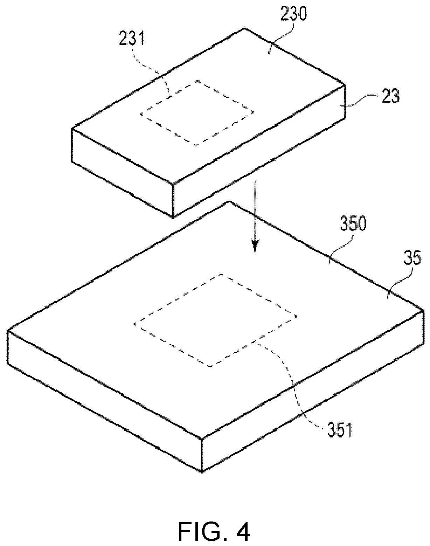

As shown in FIG. 4, the power reception device 23 includes, for example, a casing 230 and a power reception coil 231. Various components of the power reception device 23 may be mounted or otherwise incorporated on a printed circuit board, circuit substrate, or the like.

The casing 230 is, for example, a rectangular housing, and includes the power reception coil 231 and the other components of the power reception device 23 therein. The casing 230 is connected to, for example, a lower portion of the lower frame portion 112. As a specific example, the casing 230 is fixed to the mounting portion 1125 of the lower frame portion 112.

A lower surface of the casing 230 is disposed on the cart 2 to be positioned along a floor surface on which the cart 2 travels. The casing 230 has a shape that does not overlap the casing 230 of the power reception device 23 of an adjacent cart 2 when a plurality of carts 2 are stacked and stored on the cart base 3 in an overlapping manner. Furthermore , the casing 230 is located at a position where the casing 230 does not overlap or interfere with the power reception devices 23 of the adjacently stacked cart(s) 2.

The power reception coil 231 is disposed in the casing 230. The power reception coil 231 is, for example, a planar coil formed by winding a litz wire. Alternatively, the power reception coil 231 is a planar coil in which the winding is a coil pattern formed on a printed circuit board or the like. In the power reception coil 231 a power reception surface that receives power and is formed in a planar shape in this example. The power reception surface of the power reception coil 231 is disposed to face the floor surface on which the cart 2 travels. The power reception coil 231 is not limited to a planar coil as long as power can be transmitted to the power transmission device 35.

When the power reception device 23 faces the power transmission device 35, the power reception coil 231 is electromagnetically coupled to a power transmission coil 351 of the power transmission device 35. The power reception coil 231 generates an induced current by a magnetic field output from the power transmission coil 351 of the power transmission device 35.

The power reception coil 231 is connected in series with a capacitor 2321 of the power reception device 23. The power reception coil 231 is connected to the capacitor 2321 to form a power reception resonance circuit 239.

Here, the power reception resonance circuit 239 including the power reception coil 231 and the capacitor 2321 function as an AC power source that supplies AC power to a rectifier circuit 2322 that is connected to the power reception resonance circuit 239. If a magnetic field resonance method is used for power transmission, it is desirable that a resonance frequency of the power reception resonance circuit 239 is the same as, or substantially the same as, the resonance frequency of a power transmission resonance circuit 359 including the power transmission coil 351 and a capacitor 3521 of the power transmission device 35. Accordingly, the power transmission efficiency in a case where the power reception resonance circuit 239 and the power transmission resonance circuit 359 are electromagnetically coupled is improved.

When an electromagnetic induction method is used for power transmission, the power reception resonance circuit 239 need not include the capacitor 2321.

As shown in FIG. 3, the power reception device 35 includes a capacitor 2321, a rectifier circuit 2322, a voltage conversion circuit 2323, a switching circuit 2324, a load circuit 2325, a control circuit 2326, and a communication circuit 2327. Such components and/or circuits may be mounted or otherwise provided on a printed circuit board, circuit substrate, or the like. For example, these various components and processing circuits are integrated on a printed circuit board and connected to one another as necessary by wiring patterns on a printed circuit board.

The capacitor 2321 is a resonance capacitor. The rectifier circuit 2322 rectifies the AC power supplied from the power reception resonance circuit 239 and converts the rectified AC power into DC power. The rectifier circuit 2322 includes, for example, a rectifier bridge including a plurality of diodes. A pair of input terminals of the rectifier bridge is connected to the power reception resonance circuit 239. The rectifier circuit 2322 performs full-wave rectification on the AC power supplied from the power reception resonance circuit 239, and outputs DC power from a pair of output terminals. The rectifier circuit 2322 supplies DC power to the voltage conversion circuit 2323.

The voltage conversion circuit 2323 converts the DC voltage output from the rectifier circuit 2322 into a desired DC voltage. For example, two voltage conversion circuits 2323 are provided. One of the voltage conversion circuits 23231 is connected to, for example, the rectifier circuit 2322 and the switching circuit 2324 (and the load circuit 2325 via the switching circuit 2324). That voltage conversion circuit 23231 converts the DC power supplied from the rectifier circuit 2322 into DC power of a voltage suitable for charging processing, which is output to the load circuit 2325. The other voltage conversion circuit 23232 is connected to the rectifier circuit 2322 and the control circuit 2326. The other voltage conversion circuit 23232 converts the DC power supplied from the rectifier circuit 2322 into DC power suitable for a voltage for operating the control circuit 2326.

The switching circuit 2324 switches connection and disconnection of the voltage conversion circuit 23231 and the load circuit 2325. The switching circuit 2324 switches connection and disconnection of the voltage conversion circuit 23231 and the load circuit 2325 based on, for example, a signal from the control circuit 2326.

The load circuit 2325 is a load that receives DC power generated by the voltage conversion circuit 23231. The load circuit 2325 is connected to, for example, the charging circuit 221 that charges the battery cell 222. The load circuit 2325 performs, together with the charging circuit 221, a charging processing of storing DC power generated by the voltage conversion circuit 23231 in the battery cell 222, for example. The load circuit 2325 may not be provided in the power reception device 23, and the charging circuit 221 of the battery 22 may perform the function of the load circuit 2325. In addition, in a case where the power reception device 23 includes an output terminal that supplies power to the electronic device 21, the power reception device 23 may not include the load circuit 2325. That is, although a configuration in which the power reception device 23 includes the load circuit 2325 has been described, the load circuit 2325 may be provided outside the power reception device 23, and the switching circuit 2324 of the power reception device 23 may be connected to the load circuit provided outside via a connector or the like.

The control circuit 2326 controls the operation of the load circuit 2325. The control circuit 2326 is a processing circuit. The control circuit 2326 comprises, for example, a processor such as a central processing unit (CPU) and a memory. The processor executes arithmetic processing. For example, the processor performs various processes according to programs stored in the memory and writes and reads data used by the programs. The memory stores such programs, the data used thereby, and the like. The control circuit 2326 may be a microcomputer and/or an oscillation circuit.

The communication circuit 2327 contactlessly communicates information on power transmission and power reception with the power transmission device 35.

As illustrated in FIG. 1 and FIG. 2, the cart 2 is stored on the cart base 3 provided in a predetermined storage area. In FIGS. 1 and 2, a plurality of carts 2 are stored on the cart base 3 so as to be connected in a nested manner.

The cart base 3 for storing the carts 2 includes a guide base 31 as a base part, a cart gate 32, and a plurality of power transmission devices 35 supported by the guide base 31.

The guide base 31 includes a plate-like support base 311 in the storage area. The support base 311 has, on an upper surface thereof, a plurality of guide rails 312 extending in one direction and guide grooves 313 formed between the plurality of guide rails 312. Further, the support base 311 has a projection or a groove that guides the carts 2. The guide base 31 guides the traveling direction of the cart 2 on the support base 311 by restricting the movement of the front and rear wheels 153 by the guide rails 312 and the guide grooves 313. The guide base 31 supports the power transmission devices 35 at equal intervals.

The cart gate 32 includes a pair of poles 322 erected from both side parts of the guide base 31, and side bars 323 arranged at a prescribed height on both side edges of the guide base 31 and extending in one direction.

A plurality of power transmission devices 35 are provided between the guide grooves 313 of the guide base 31 along which a pair of wheels 153 of a cart 2 are guided. The power transmission devices 35 are arranged side by side in the extending direction of the pair of guide grooves 313 of the guide base 31. Here, the extending direction of the guide groove 313 is the traveling direction of the cart 2 on the guide base 31. In other words, the extending direction of the guide groove 313 is the stacking direction of a plurality of carts 2 on the guide base 31. The power transmission devices 35 are arranged to face the power reception devices 23 of the carts 2 stacked and stored on the cart base 3. Each power transmission device 35 transmits power to the power reception device 23 of the cart 2 facing the power transmission device 35 in a non-contact manner.

As shown in FIGS. 3 and 4, the power transmission device 35 includes, for example, a casing 350, a power transmission coil 351, an AC adapter 354, and various other circuit components.

The casing 350 is formed in, for example, a rectangular box shape. The casing 350 accommodates the power transmission coil 351 and the other circuit components of a power transmission device 35 therein. The casing 350 faces the power reception device 23 of the cart 2 housed on the cart base 3. The distance between the casing 350 and the casing 230 of the power reception device 23 is typically several millimeters (mm), but, in general, is in a range of 1 mm to 10 mm.

The power transmission coil 351 is, for example, a planar coil formed by winding a litz wire. Alternatively, the power transmission coil 351 is a planar coil in which a winding as a coil pattern is formed on a printed circuit board. In the power transmission coil 351, for example, a power transmission surface through which power is transmitted is formed in a planar shape.

The power transmission surface of the power transmission coil 351 is disposed along the floor surface on which the cart 2 travels. The power transmission surface of the power transmission coil 351 is accommodated in the cart base 3 to face the power reception surface of the power reception coil 231 provided in the facing cart 2. The power transmission coils 351 of the power transmission devices 35 are provided to face the power reception coils 231 of the power reception devices 23 of the stacked carts 2 stored on the cart base 3.

When the power reception device 23 and the power transmission device 35 face each other, the power transmitting coil 351 is electromagnetically coupled to the power reception coil 231.

The power transmission coil 351 is connected in series with a capacitor 3521. The power transmission coil 351 is connected to, for example, a capacitor 3521 and forms a power transmission resonance circuit 359 to be used as a power transmission unit.

Here, it is desirable that the resonance frequency of the power transmission resonance circuit 359 is the same as, or substantially the same as, the oscillation frequency of the oscillation circuit of the control circuit 3528. This improves power transmission efficiency. When an electromagnetic induction method is used for power transmission, the power reception resonance circuit 239 need not include the capacitor 2321.

As shown in FIG. 3, the power transmission device 35 includes a capacitor 3521, a power transmission circuit 3522, a voltage conversion circuit 3523, a switching circuit 3524, a current sensor 3526, a current detection circuit 3527, a control circuit 3528, and a communication circuit 3529. For example, these various components and processing circuits can be integrated on a printed circuit board, circuit substrate or the like, and connected as necessary to one another with wiring patterns of the printed circuit board or the like.

The capacitor 3521 and the power transmission coil 351 constitute a resonance circuit.

The power transmission circuit 3522 generates transmission power and supplies the generated transmission power to the power transmission coil 351. For example, the power transmission circuit 3522 generates AC power as the transmission power by switching DC power supplied via the AC adapter 354 or the like based on the control of the control circuit 3528. The power transmission coil 351 outputs power that can be received by the power reception device 23 according to the transmission power supplied from the power transmission circuit 3522. The power transmission circuit 3522 generates AC power having the same or substantially the same frequency as the resonance frequency of the power transmission resonance circuit 359. The power transmission circuit 3522 includes a switching element such as a field effect transistor (FET). The power transmission circuit 3522 is switched on and off according to an output of an oscillation circuit in the control circuit 3528. The power output from the power transmission circuit 3522 is transmitted to the power reception device 23 by using electromagnetic coupling such as electromagnetic induction or magnetic field resonance between the power transmission coil 351 and the power reception coil 231.

The voltage conversion circuit 3523 converts a voltage of a DC power supply supplied via, for example, the AC adapter 354 connected to a commercial power supply into a desired DC voltage. As a specific example, the voltage conversion circuit 3523 generates power for operating the control circuit 3528 and supplies the power to the control circuit 3528.

The switching circuit 3524 switches connection and disconnection of the AC adapter 354 and the power transmission circuit 3522. The switching circuit 3524 switches a power supply state from the power transmission device 35 to the power reception device 23 by connecting or disconnecting the AC adapter 354 and the power transmission circuit 3522 according to a control signal from the control circuit 3528. For example, the switching circuit 3524 supplies to the power transmission circuit 3522 either the DC power supplied from an external DC power supply or the DC power obtained by stepping down the DC power supplied from the external DC power supply by the voltage conversion circuit 3523. The switching circuit 3524 switches the DC power to be supplied to the power transmission circuit 3522 based on the control of the control circuit 3528.

The current sensor 3526 detects a direct current input to the power transmission coil 351 or the power transmission circuit 3522. The current sensor 3526 is a minute resistor connected between the switching circuit 3524 and the power transmission circuit 3522. A potential corresponding to the current transmitted from the switching circuit 3524 to the power transmission circuit 3522 is generated as a current detection signal in the current sensor 3526.

The current detection circuit 3527 amplifies a minute signal detected by the current sensor 3526 and outputs the amplified signal to the control circuit 3528.

The control circuit 3528 controls the operation of the power transmission circuit 3522. The control circuit 3528 is a processing circuit. The control circuit 3528 comprises, for example, a processor such as a CPU and a memory. The processor executes arithmetic processing. For example, the processor performs various processes according to one or more programs stored in the memory and writes and reads data used by the programs. The memory stores such programs, the data used thereby, and the like. The control circuit 3528 may be a microcomputer and/or an oscillation circuit.

For example, the control circuit 3528 controls the frequency of the AC power output from the power transmission circuit 3522 and controls on and off of the operation of the power transmission circuit 3522. For example, the control circuit 3528 controls the switching circuit 3524 to switch between a power transmission state in which a magnetic field is generated in the power transmission coil 351 and a standby state in which a magnetic field is not generated in the power transmission coil 351. Further, the control circuit 3528 may intermittently generate a magnetic field in the power transmission coil 351 to perform control for changing the timing of power transmission.

When a power reception device 23 faces a power transmission device 35, the control circuit 3528 first performs authentication processing for checking whether the power reception device 23 is a genuine power reception device 23.

The control circuit 3528 also performs foreign object detection processing for detecting a metallic foreign object disposed between the power transmission device 35 and the power reception device 23.

Here, a metal foreign object to be detected is formed of metal at least partially or entirely. The metallic foreign object generates heat when it is between the power reception device 23 and the power transmission device 35 while the power transmission coil 21 transmits power. Examples of a metal foreign object include objects such as a coin, a metal fragment, a paper piece provided with a metal film thereon such as aluminum foil, a metalized resin film, a paper clip, and a hairpin.

The memory of the control circuit 3528 stores a threshold current value for a current that flows in the power transmission device 35 when a metal foreign object of greater than a predetermined size is present between the power transmission coil 351 and the power reception coil 231. Then, the control circuit 3528 compares the current value detected by the current sensor 3526 and the current detection circuit 3527 with the stored threshold value. If the current values detected by the current sensor 3526 and the current detection circuit 3527 are different from the normal or expected current values, such as when the current values exceed the threshold value, the control circuit 3528 controls the switching circuit 3524 to enter a standby state in which no magnetic field is generated in the power transmitting coil 351.

After the authentication is established and no foreign object is detected, the control circuit 3528 starts power transmission from the power transmission device 35 to the power reception device 23 for a charging operation.

The communication circuit 3529 communicates information relating to power transmission and power reception with the communication circuit 2327 of the power reception device 23 in a non-contact manner.

The AC adapter 354 is disposed outside the casing 350, for example, and is connected to the power transmission device 35 in this example.

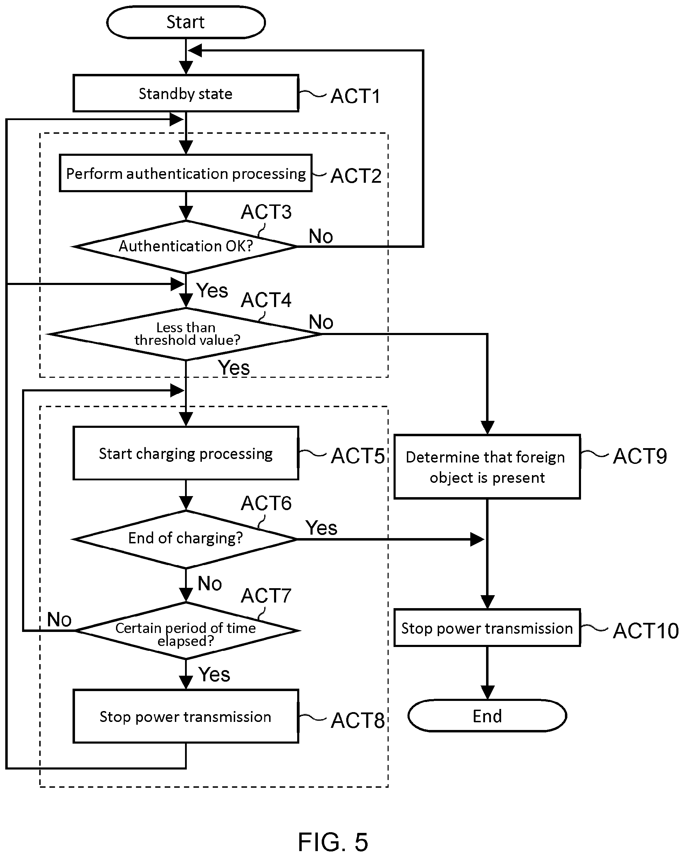

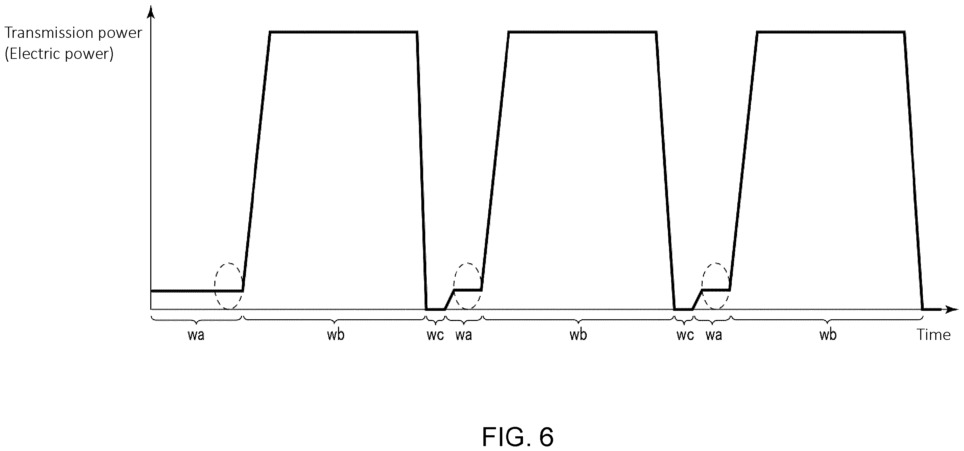

Next, an example of a control method of the power supply system 1 will be described with reference to FIGS. 5 and 6. Fig. 5 is a flowchart of power transmission processing performed by each power transmission device 35 of the power supply system 1, and Fig. 6 is a graph showing a change in a power transmission current.

As ACT1, the control circuit 3528 sets the power transmission device 35 to the standby state Wa. In the standby state, the control circuit 3528 performs power transmission with just a standby current. For example, the standby current has a current value sufficient for the authentication processing and foreign object detection but is less than the current value during normal power transmission in the charging processing. Although an example in which the authentication processing and the foreign object detection processing are performed using the same standby current value is presently described, the current values used for authentication and foreign object detection may be different current values. When the power reception device 23 is located above the power transmission device 35 in the standby state, the control circuit 3528 first performs the authentication processing to check whether the power reception device 23 is a genuine (or at least compatible) power reception device (ACT2). As the authentication processing, for example, the control circuit 3528 performs load modulation on the power reception device 23 and detects on the power transmission side a change in current which is unique to the power reception device 23. In some examples, control circuit 3528 may perform the authentication based on an inquiry and a response about an ID of the power reception device 23 using wireless communication method such as wireless radio communication or infrared communication.

In the authentication processing, if it is determined that the power reception device 23 is a genuine power reception device 23 (Yes in ACT3), the processing proceeds to foreign object detection processing in ACT4. On the other hand, if the power reception device is not a genuine power reception device 23 (No in ACT3), the power reception device returns to the standby state without starting normal power transmission processing.

As ACT4, the control circuit 3528 performs the foreign object detection processing based on the power transmission current value. If there is a metal foreign object between the power transmission device 35 and the power reception device 23, the inductance of the power transmission coil 351 decreases due to the influence of the metal foreign object, and the current flowing through the coil increases. Alternatively, since an eddy current flows in the metal foreign object and heat is generated, that is, power is absorbed, the power transmission current increases compared to a case where there is no metal foreign object. Accordingly, the presence or absence of the foreign object can be determined depending on whether or not the power transmission current exceeds a preset foreign object threshold value during a certain period of time at the time of current detection. For example, the control circuit 3528 detects whether the power transmission current value falls below the foreign object detection threshold value within a certain period, and determines that there is no metal foreign object if the power transmission current value is less than the foreign object detection threshold value. On the other hand, if the power transmission current value does not fall below the foreign object detection threshold value during the certain period, it is determined that a metal foreign object is present.

For example, the transmission current value is detected by amplifying, by the current detection circuit 3257, a minute potential difference detected by a current sensor 3526 and converting the voltage value into a current value by the control circuit 3528. The current threshold value for detecting the foreign object is set in advance to a value larger than the power transmission current in the standby state.

In a case where the power transmission current value becomes less than the foreign object threshold value in ACT4, the control circuit 3528 determines that there is no foreign object (Yes in ACT4), and starts the charging processing (i.e., normal power transmission) (ACT5). In ACT4, in a case where the power transmission current value is equal to or greater than the foreign object threshold value (No in ACT4), it is determined that a foreign object is present (ACT9), and power transmission is stopped (ACT10), and the processing ends. Before ending the processing, notification of a foreign object may be performed by the power transmission device 35.

The control circuit 3528 performs the normal power transmission process Wb (see FIG. 6) as ACT5. Specifically, power transmission is performed for a certain period of time at a current value for charging. For example, after starting the charging in ACT5, the control circuit 3528 ends the charging in ACT6 in a case where the charging end condition is satisfied, and continues the charging processing in a case where the charging end condition is not satisfied. For example, if the charging end condition is not satisfied (No in ACT6) and the certain period of time has not elapsed from the start of power transmission (No in ACT7), the process returns to ACT5. For example, in a case where the required charging time or the required charging amount is reached, it is determined that the charging end condition is satisfied (Yes in ACT6), the charging processing is ended, and the power transmission is stopped in ACT10. When the certain period of time has elapsed from the start of the power transmission (Yes in ACT7), the control circuit 3528 temporarily stops the power transmission (ACT8) and returns to ACT 1. That is, the power transmission device 35 periodically stops power transmission for the certain period of time and returns to a standby state.

The power transmission stop time in ACT8 is, for example, 1 to 3 seconds. At this time, the power transmission current is set to 0 or an extremely low value close to 0.

By the power transmission stop processing Wc (see FIG. 6) in which the transmission power current is set to 0 or substantially 0, the power reception device 23 is in an initial state or standby state. At this time, since the power reception device 23 is already near the power transmission device 35, the power reception device 23 enters the standby state Wa again, and the process shifts to the processing of ACT2 and thereafter. That is, since the power reception device 23 is controlled to perform the authentication and the foreign object detection when the power reception device 23 is held near the power transmission device 35 for the first time, the power transmission device 35 temporarily stops the power transmission, so that the power reception device 23 also enters the initial state, and even if the process on the power reception device 23 is not changed, a series of processes that proceed to the charging processing through the authentication processing and the foreign object detection processing in the power transmission stop state is smoothly performed as the process in the normal standby state Wa. In other words, by periodically and temporarily stopping power transmission by the power transmission device 35, as the charging processing, a series of processes of performing the normal power transmission process Wb for charging via the authentication processing and the foreign object detection processing which are the initial operations in the standby state Wa and performing the power transmission stop Wc is repeated during the normal power transmission.

According to the power transmission device 35 and the power supply system 1 described above, it is possible to detect a metallic foreign object between the power transmission coil 351 and the power reception coil 231 during power transmission. That is, in the charging processing, the power transmission device 35 of the power supply system 1 performs the foreign object detection processing in a standby state by periodically and temporarily stopping power transmission. That is, by performing the foreign object detection processing in the standby state (before the start of normal power transmission), it is possible to detect a foreign object with a small transmission power current and relatively high sensitivity. Further, during the charging, the foreign object detection processing can be performed by the control on only the power transmission side. That is, by stopping power transmission on the power transmission device 35 side, the power reception device 23 is initialized, and the authentication operation and foreign object detection processing, which are initial operations, are promptly performed. In addition, the timing of the foreign object detection can be changed without changing the existing functions of the power reception device 23.

Therefore, with a conventional configuration in which connection and disconnection of a load are periodically repeated on the power reception side and the change in the current value is detected on the power transmission side, it is necessary to control both the power transmission device and the power reception device. On the other hand, in the power supply system 1 described above, by temporarily stopping power transmission, the foreign object detection can be performed by control of the power transmission device 35 only, and the overall control process becomes simpler.

Embodiments are not limited to those specific examples described above, and the described examples can be appropriately changed, altered, and modified. For example, the charging target is not limited to an electronic device 21 attached to a cart 2, and can be any type of terminal, device, or system utilizing a rechargeable battery or the like. Furthermore, the particular shapes and configurations of the cart 2 and the cart base 3 are not limited to those described above.

In this disclosure, authentication processing and foreign object detection processing are performed each time power transmission is stopped. However, embodiments are not limited to this. For example, after the authentication processing is performed for the first time, only the foreign object detection processing might be performed after power transmission is stopped, and the second and subsequent authentication processing may be omitted after the initial authentication.

Further, in an above-described example, a shopping cart has been described as an example of the cart 2 having the power reception device 23 of the power supply system 1 that supplies power in a non-contact manner. However, the cart 2 on which the power reception device 23 is mounted is not limited to a shopping cart, and may be, for example, a picking cart used in a warehouse or the like.

In the power supply system 1 described above, a metallic foreign object can be detected only by the control of the single power transmission device 35 even during the power transmission.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A non-contact power transmission device, comprising:
a power transmission circuit connected to a power transmission coil and configured to transmit power to a power reception coil through the power transmission coil in a non-contact manner; and
a control circuit configured to perform first power transmission by which power is transmitted from the power transmission coil at a first level, wherein
the control circuit is further configured to:
perform a foreign object detection by which a foreign object between the power transmission coil and the power reception coil can be detected before the first power transmission is performed, the foreign object detection using power transmitted from the power transmission coil at a second level that is less than the first level, and
perform the first power transmission after the foreign object detection if the foreign object is not detected.

2. The non-contact power transmission device according to claim 1, wherein the control circuit is further configured to perform authentication processing for determining the power reception coil is a component of a compatible power reception device before performing the foreign object detection.

3. The non-contact power transmission device according to claim 1 or 2, wherein the control circuit is further configured to perform authentication processing for determining the power reception coil is a component of a compatible power reception device before performing the first power transmission.

4. The non-contact power transmission device according to claim 3, wherein the authentication processing is performed using power transmitted from the power transmission at the second level.

5. The non-contact power transmission device according to any of claims 1 to 4, further comprising:
a current sensor configured to detect a current that flows in the power transmission circuit, wherein
the foreign object detection is based on the current detected by the current sensor.

6. The non-contact power transmission device according to claim 5, wherein the control circuit is further configured to determine that the foreign object is present between the power transmission coil and the power reception coil when the current detected by the current sensor does not fall below a threshold value within a predetermined period after the foreign object detection is started.

7. The non-contact power transmission device according to any of claims 1 to 6, wherein the foreign object comprises a metal.

8. The non-contact power transmission device according to any of claims 1 to 7, further comprising:
a communication circuit configured to transmit information about the power transmitted from the power transmission coil.

9. The non-contact power transmission device according to any of claims 1 to 8, further comprising:
a housing in which the power transmission circuit and the control circuit are located, wherein
the housing is installable in a guide rail for guiding a cart that includes the power reception coil.

10. The non-contact power transmission device according to claim 9, wherein the housing includes a surface that faces both a power transmission surface of the power transmission coil and a power reception surface of the power reception coil.

11. A non-contact power supply system, comprising:
a power reception device including a power reception coil; and
a power transmission device including:
a power transmission circuit connected to a power transmission coil and configured to transmit power to the power reception device through the power transmission coil in a non-contact manner, and
a control circuit configured to perform a first power transmission by which power at a first power level is transmitted from the power transmission coil, wherein
the control circuit is further configured to:
perform a foreign object detection by which a foreign object between the power transmission device and the power reception device can be detected before the first power transmission is performed, the foreign object detection using power transmitted from the coil at a second power level that is less than the first power level, and
perform the first power transmission after the foreign object detection if the foreign object is not detected.

12. The non-contact power supply system according to claim 11, wherein the control circuit is further configured to perform authentication processing for determining the power reception coil is a component of a compatible power reception device before performing the foreign object detection, wherein preferably the control circuit is further configured to perform authentication processing for determining whether the power reception device is a compatible device before performing the first power transmission, and wherein preferably the authentication processing is performed based on power transmitted from the power transmission device at the second power level.

13. The non-contact power supply system according to claim 11 or 12, wherein
a current sensor configured to detect a current that flows in the power transmission circuit, wherein
the foreign object detection is based on the current detected by the current sensor, wherein preferably the control circuit is further configured to determine that the foreign object is present between the power transmission device and the power reception device when the current detected by the current sensor does not fall below a threshold value within a predetermined period after the foreign object detection is started.

14. The non-contact power supply system according to any of claims 11 to 13, wherein the power reception device is configured to remain in an idle state if power received from the power transmission device is less than the first power level, the non-contact power supply system preferably further comprising:
a cart; and
a base on which the cart is stored, wherein
the power reception device is attached to a lower portion of the cart, and
the power transmission device is installed in the base, wherein preferably the base is on a floor on which the cart is movable.

15. A method performed by a non-contact power transmission device that includes a power transmission circuit connected to a power transmission coil configured to transmit power to a power reception coil, the method comprising:
performing a foreign object detection by which a foreign object can be detected between a power transmission coil and a power reception coil can be detected; and
if the foreign object is not detected in the foreign object detection, performing a first power transmission at a first power level, wherein
the foreign object detection is performed at a second power level that is less than first power level.
